Europäisches Patentamt

(19) European Patent Office

Office européen des brevets

(11) Publication number: **0 100 080**
**A2**

## (12) EUROPEAN PATENT APPLICATION

(21) Application number: 83107229.3

(51) Int. Cl.³: **H 04 M 1/05**

(22) Date of filing: 22.07.83

(30) Priority: 27.07.82 JP 113592/82 U

(43) Date of publication of application: 08.02.84
Bulletin 84/6

(84) Designated Contracting States: **CH DE FR GB IT LI NL
SE**

(71) Applicant: Konomi, Masao, 4-4-5, Meguro, Meguro-ku
Tokyo, 153 (JP)
Applicant: Miyata, Shintaro, Apt. 408 2-3-20, Otsuka,
Bunkyo-ku Tokyo 112 (JP)

(72) Inventor: Konomi, Masao, 4-4-5, Meguro, Meguro-ku
Tokyo, 153 (JP)
Inventor: Miyata, Shintaro, Apt. 408 2-3-20, Otsuka,
Bunkyo-ku Tokyo 112 (JP)

(74) Representative: Patentanwälte Grünecker, Dr.
Kinkeldey, Dr. Stockmalr, Dr. Schumann, Jakob, Dr.
Bezold, Meister, Hilgers, Dr. Meyer-Plath,
Maximilianstrasse 58, D-8000 München 22 (DE)

(54) Voice detection filter.

(57) A voice-activated switching system for a single carrier
two-way voice communication used in combination with an
earpiece, inserted in the external auditory canal and having the
function of picking up voice sound within the canal through a
microphone and feeding received voice sounds sent into the
canal through a speaker, is provided with a narrow band filter
limiting voice frequencies to between about 300 Hz and about
500 Hz. The filter minimizes feedback between the microphone
and the speaker, which occurs when the earpiece being worn
in the ear canal.

- 1 -

VOICE DETECTION FILTER

BACKGROUND OF THE INVENTION

The present invention relates to a voice-activated switching system (VOX) which is used in combination with an earpiece to be inserted in a human external auditory canal.

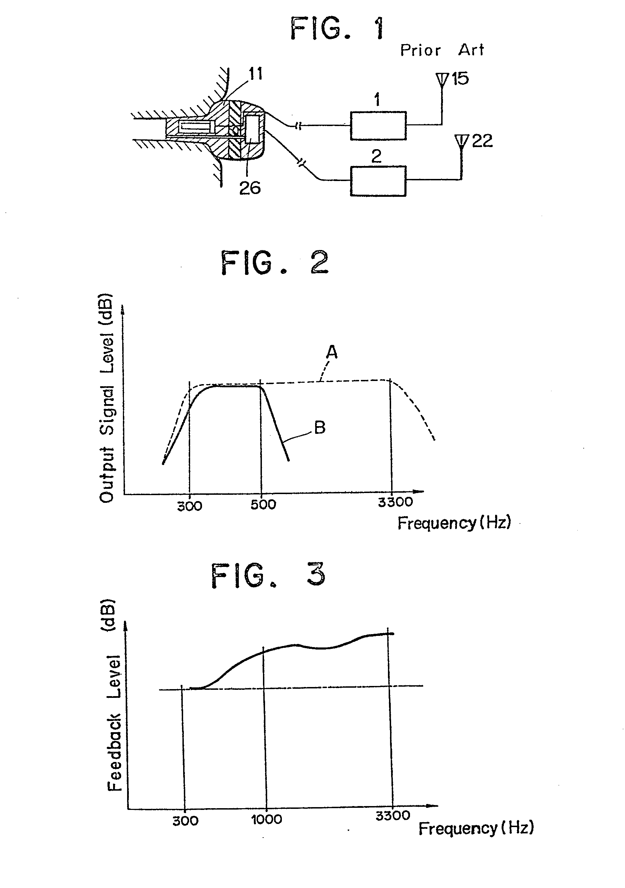

Such an earpiece includes a microphone, which converts bone-conducted voice vibrations within the external auditory canal into electrical signals, and a speaker, which converts electrical signals received by a receiver into voice sound and feeds the sound into the ear drum of its wearer. An example of such an earpiece is shown in Fig. 1, where a microphone 11 picks up bone-conducted voice vibrations within the external auditory canal and the output of the microphone is transmitted by transmitter system 1 through aerial 15, whereas the speaker 26 converts into voice sound electrical signals received by the receiver system 2 via aerial 22.

This type of earpiece has a merit of being immune to ambient noises and of picking up substantially only voice sounds. Due to this feature, it has become practical to design a hands-free single carrier two-way voice communication system by combining the VOX and the earpiece, because there is little possibility that the VOX would be erroneously activated by ambient noises. The combination eliminates the need for a manually operated switch or any other mechanical switch which is always needed in a conventional single carrier two-way voice communication system.

Such an earpiece, however, may cause erroneous switchings

0100080

- 2 -

in the VOX due to a feedback phenomenon from the speaker to the microphone when used in a high ambient noise. In other words, when the sound output level of the speaker has to be increased significantly so that the wearer can communicate with another party in high ambient noise by the single carrier two-way voice communication system, the output leaks to the microphone due to the feedback phenomenon and causes erroneous switching in the VOX.

## SUMMARY OF THE INVENTION

The principal object of the present invention, therefore, is to provide a VOX which, when used in combination with an earpiece, will not cause erroneous switching even if the sound volume level of the speaker is raised high.

The inventor has discovered that any feedback in the earpiece varies over the speech frequency range. On the basis of such observation, the inventor has added a narrow band filter in the VOX, the pass band of which corresponds to a frequency range showing the least feedback. The resulting earpiece is free of erroneous switching due to feedback in the earpiece.

Under the invention, the pass band of the narrow band filter ranges from 300 Hz to 500 Hz, which is significantly narrower than that of an ordinary VOX and, since the filter is incorporated in the VOX and not in the voice signal route, the filter will not distort voice signals transmitted to another party.

- 3 -

## BRIEF DESCRIPTION OF THE DRAWINGS

The above object, features and advantages of the invention will appear more fully from the following description taken in connection with the accompanying drawings, wherein:

Fig. 1 is a cross section of an earpiece as inserted in an external auditory canal and showing the voice transmission and receiving systems in block diagrams;

Fig. 2 shows the frequency characteristics of the output of a narrow band filter inserted in the VOX of the earpiece of Fig. 1;

Fig. 3 shows the frequency characteristics of feedback level of the earpiece of Fig. 1;

Fig. 4 shows the frequency characteristics of the sound power spectrum of the sounds of a human voice;

Fig. 5 is a block diagram of one embodiment of a VOX of the invention incorporated in a single carrier two-way voice communication system; and

Figs. 6 and 7 show representative examples of electrical circuits for the narrow band filter and voice detector, respectively, of the present invention.

## DETAILED DESCRIPTION OF THE EMBODIMENTS

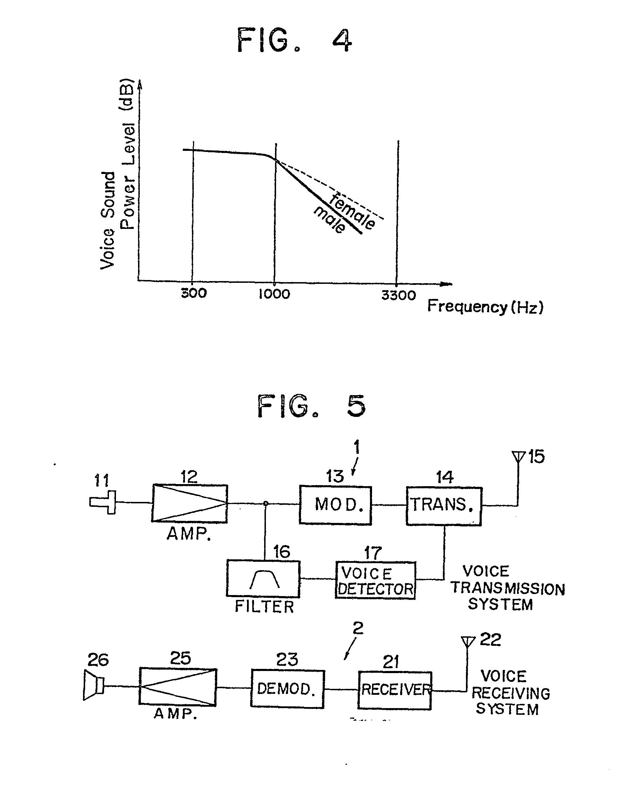

One embodiment of the present invention is now described in reference to Fig. 5. Numeral 1 designates a voice transmission system. Known bone-conduction vibration pick-up type microphone 11 converts bone-conducted vibrations of voice sound picked up within the external auditory canal into

- 4 -

electrical signals. Amplifier 12 amplifies the signals. The amplified electrical signals are equalized and modulated by modulator 13. The modulated electrical signals are transmitted by transmitter 14 through aerial 15.

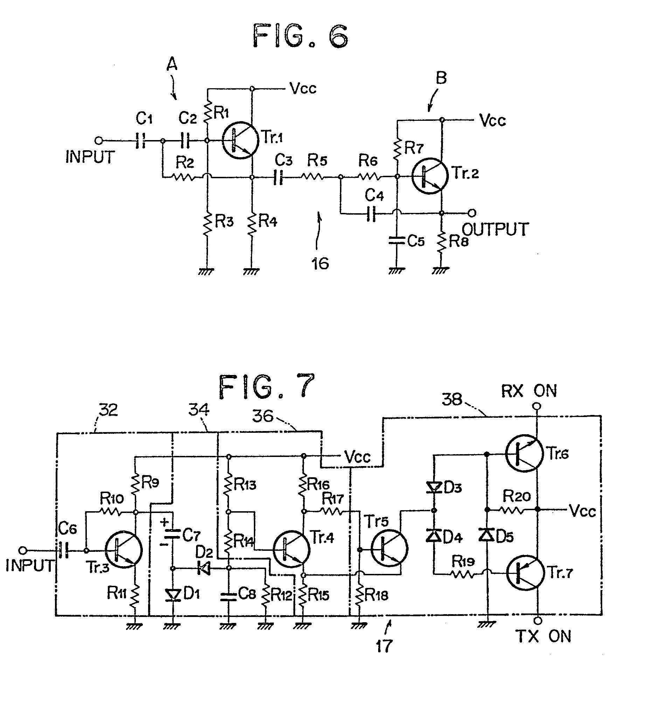

Under the invention, the voice-actuated switching system (VOX) includes a narrow band filter 16 and a voice detector 17. The output of amplifier 12 is fed also into narrow band filter 16 for limiting the received frequencies to a range of 300 Hz to 500 Hz. The output of narrow band filter 16 is fed into voice detector 17 and processed to detect the voice sounds of the wearer of the earpiece. Upon detecting the voice sound, voice detector 17 sends a control signal to transmitter 14 to turn on transmitter 14. Representative electrical circuits for narrow band filter 16 and voice detector 17, as shown in Figs. 6 and 7, respectively, will be described hereinafter.

Numeral 2 designates a voice-receiving system. Electromagnetic waves for voice reception are detected by receiver 21 through aerial 22. The signals from the receiver 21 are demodulated to audio signals by demodulator 23. The audio signals are amplified by amplifier 25. The amplifier audio signals are reproduced as voice sounds by speaker 26.

When the earpiece is inserted into an ear, voice sound reproduced by speaker 26 tends to be fedback to microphone 11 very strongly due to the so-called "insertion effect" caused by the closed space within the external auditory canal.

Such feedback between microphone 11 and speaker 26 varies depending on signal frequencies as shown in Fig. 3. In other words, when the earpiece is inserted into the external auditory canal, the feedback of the reproduced voice sound, as indicated by the solid line as shown in Fig. 3, is increased beyond the feedback level without the insertion effect indicated by the broken line in the frequency range exceeding 500 Hz.

The inventor has discovered that the frequency range from 300 Hz to 500 Hz shows the least insertion effect. As a result, narrow band filter 16, which is connected before voice detector 17 and passes only signals within the frequency range as shown by the line B in Fig. 2 (the line A shows a frequency characteristic of a conventional voice sound detector,) makes it possible to minimize such insertion effect, thus preventing erroneous switchings from the reception phase to the transmission phase.

It is to be noted that the narrow band filter does not distort voice sound signals to be transmitted, since the signals bypass the voice detection circuit as shown in Fig. 5. It is also to be noted that, since the voice spectrum of both male and female in this frequency range, as shown in Fig. 4, do not differ very much, the VOX, with this new filter, detects voices of male and female equally well.

The invention is not limited to a specific type of narrow band filter, as many known filters limiting the frequency range from 300 Hz to about 500 Hz will suffice.

- 6 -

An example of such a narrow band filter circuit is shown in Fig. 6.

As shown in Fig. 6, the narrow band filter 16 includes the combination of high pass filter A and low pass filter B, the cut-off frequency of which are 300 Hz and 500 Hz, respectively. Both filters are negative feedback type CR active filters. Attentuation beyond each cut-off frequency is, therefore, 12 db per octave.

The high pass filter A comprises a transistor Tr. 1 having its base coupled to the input of the narrow band filter 16 through capacitors C1 and C2, and to ground through resistor R3, its emitter connected through resistor R4 to a reference potential, such as ground, and its collector connected to a voltage source VCC. The emitter is also fedback through resistor R2 to the base through capacitor C2 and coupled through capacitor C3 and resistor R5 as the output of the high pass filter A. The collector of transistor Tr. 1 is fedback through resistor R1 directly to the base.

The low pass filter B comprises a transistor Tr. 2 having its base connected to resistor R5 through resistor R6 and connected to ground through capacitor C5, its emitter connected to ground through resistor R8 and to the junction of resistors R5 and R6 through capacitor C4, and its collector connected to voltage supply VCC and to the base transistor Tr. 2 through resistor R7. The emitter of the transistor Tr. 2 also provides the output of the narrow band filter 16.

When voice signals enter the narrow band filter 16 through capacitor Cl and reach capacitor C3, voice signal frequencies below 300 Hz are attentuated.  Capacitors Cl and C2, and resistors R2 and R3 determine the cut-off frequency.  When the attenuated voice signals enter the low pass filter through the capacitor C3 and reach the output, voice signal frequencies above 500 Hz are attenuated.  Capacitors C4 and C5, and resistors R5 and R6 determine the cut-off frequency.

Likewise, the voice detector 17 may be of a known type. As illustrated in Fig. 7, the voice detector 17 may comprise a buffer 32, an integrator 34, a switching circuit 36 and a control signal generator 38.  The illustrated buffer 32 includes a transistor Tr. 3 having its base coupled through a capacitor C6 to the output of the narrow band filter 16, its emitter grounded through resistor R11, and its collector connected to a voltage source VCC through resistor R9.  The collector is also fedback to the base through resistor R10.

The integrator 34 may comprise a capacitor C7 coupled between the collector of transistor Tr. 3 and the junction between diodes D1 and D2.  Diode D1 is inversely poled to ground and diode D2 is forwardly poled to the junction of a capacitor C8 and a resistor R12 which are in parallel to ground.

Switching circuit 36, as illustrated, includes a transistor Tr. 4 having its base coupled through resistor R14 to diode D2 of the integrator 34.  The base of transistor Tr. 4 is also connected to power source VCC through resistor

- 8 -

R13. The emitter of transistor Tr. 4 is grounded through resistor R15 and the collector is coupled to the power source VCC through resistor R16 and to the control signal generator through resistor R17.

The control signal generator 38, as an example, may include three transistors Tr. 5, Tr. 6 and Tr. 7. The base of transistor Tr. 5 is connected to resistor R17 and to ground through resistor R18. The emitter of transistor Tr. 5 is connected directly to the emitter of transistor Tr. 4 and the collector is connected to the base of transistor Tr. 6 through diode D3 and to the base of transistor Tr. 7 through diode D4 and resistor R19. The base of transistor Tr. 6 is also connected to ground through diode D5.

In the illustrated control signal generator 38, the transistors Tr. 6 and Tr. 7 are of opposite types, transistor Tr. 6 being NPN and transistor Tr. 7 being PNP. The emitter of transistor Tr. 6 has a contact for turning the voice receiving circuit on, the collector of transistor Tr. 6 and the emitter of transistor Tr. 7 are both connected to voltage source VCC. The collector of transistor Tr. 7 has a contact for emitting a signal for turning voice transmission on. The base of transmitter Tr. 6 is connected through resistor R20 both to the collector of transistor Tr. 6 and the emitter of transistor Tr. 7. The junction of the base of transistor Tr. 6 and resistor R20 is connected to ground through diode D5.

- 9 -

Voice signals enter into the base of transistor Tr. 3 through capacitor C6 and reach capacitor C7 through the collector. The voice signals are detected by diodes D1 and D2 and charge capacitor C8 to a negative dc voltage as long as voice signals are being detected. When capacitor C8 is sufficiently charged, transistor Tr. 4 is turned off and transistor Tr. 5 is turned on. As soon as transistor Tr. 5 is turned on, transistor Tr. 7 comes on, resulting in voltage flowing from source VCC to the transmitter circuit.

When voice signals are no longer received at the base of transistor Tr. 3, capacitor C8 starts discharging through resistors R12, R14 and R13. When the charge on capacitor C8 approaches zero, transistor Tr. 4 comes on and transistor Tr. 5 is turned off. As a result, transistor Tr. 7 is turned off and voltage source VCC is cut off from the transmitter circuit.

The embodiment described above is a wireless system, but can be applied to wired single carrier two-way voice communication systems as well.

The invention makes it possible to design a hands-free single carrier two-way voice communication system having no feedback switching problems.

C100080

- 10 -

WHAT IS CLAIMED IS:

1.  A voice-activated switching system for a single carrier two-way voice communication system used in combination with an earpiece, which is inserted into an external auditory canal and has the voice transmission function of picking up voice sounds within the external auditory canal of a wearer thereof, converting the voice sounds into electrical signals and feeding the electrical signals to a transmitter, and the voice reception function of feeding received voice sounds to the external auditory canal, said voice-activated switching system comprising:

a narrow band filter for also receiving said electrical signals and passing only portions thereof within a specified frequency range as an output thereof; and

a voice detector connected between said narrow band filter and said transmitter for processing said output of said narrow band filter to detect said voice sounds and, upon detecting said voice sounds, to send a control signal to said transmitter to turn on said transmitter.

2.  A voice-activated switching system according to claim 1, wherein said specified frequency range is from about 300 Hz to about 500 Hz.

0100080

1/3

FIG. 1

Prior Art

FIG. 2

FIG. 3

# FIG. 4

# FIG. 5

0100080

3/3

FIG. 6

FIG. 7